# EUROPÄISCHE PATENTSCHRIFT

(11) **EP 2 903 200 B1**
(45) Veröffentlichungstag und Bekanntmachung des Hinweises auf die Patenterteilung: **09.08.2023**
(21) Anmeldenummer: 15000197.2
(22) Anmeldetag: 23.01.2015
(51) Int. Cl.: H04L 9/06

(54) **SICHERES KRYPTOGRAFISCHES VERFAHREN UND VORRICHTUNG DAFÜR**
Secure cryptographic method and device for same
Procédé de cryptologique sécurisé et son dispositif associé

(30) Priorität: 29.01.2014 DE 102014000996
(43) Veröffentlichungstag der Anmeldung: 05.08.2015
(73) Patentinhaber: Gude, Michael, 50169 Kerpen (DE)
(72) Erfinder: Gude, Michael, 50169 Kerpen (DE)

(56) Entgegenhaltungen:
- EP-A1- 2 175 580
- WO-A1-01/74005
- WO-A1-2010/035202
- US-A1- 2006 177 065
- US-A1- 2010 250 968
- "Chapter 1: Overview of Cryptography ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 1 - 48 , 1. Oktober 1996 (1996-10-01), XP001525001, ISBN: 978-0-8493-8523-0 Gefunden im Internet: URL:http://www.cacr.math.uwaterloo.ca/hac/
- "Chapter 5: Pseudorandom Bits and Sequences ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 190 , 1. Oktober 1996 (1996-10-01), XP001525005, ISBN: 978-0-8493-8523-0 Gefunden im Internet: URL:http://www.cacr.math.uwaterloo.ca/hac/

## Beschreibung

Seit vielen Jahren ist es ein großes Problem Daten so zu verschlüsseln, dass sie für den unautorisierten Empfänger oder Mithörer nicht entschlüsselbar sind, jedoch vom autorisierten Empfänger wieder in die ursprüngliche lesbare Fassung entschlüsselt werden können.

Allen bekannten Verfahren, die auf mathematischen Verfahren beruhen, haben zwei eklatante Nachteile:
1. Es gibt bislang keine mathematischen Beweise für die Sicherheit der Verfahren. So beruhen übliche Verfahren auf der Schwierigkeit große Primzahlen zu berechnen oder auch Wurzeln sehr großer Zahlen.
2. Die Verfahren sind mit erheblicher Rechenleistung angreifbar, so dass mit der Zeit immer größere Schlüssel Verwendung finden.

Besonders unangenehm ist dabei, dass heute als nicht entschlüsselbar geltende Daten bereits in wenigen Jahren entschlüsselt werden können. So können Daten, die heute von Geheimdiensten und anderen aufgezeichnet werden, in der nahen Zukunft vollständig entschlüsselt werden.

Es gibt jedoch ein Verfahren, dass 100% unangreifbar ist und eine Entschlüsselung auch in ferner Zukunft nicht ermöglicht. Das ist die Verwendung eines symmetrischen Einmalschlüssels. Dieser Schlüssel hat folgende Eigenschaften:
1. Es ist eine Folge von völlig zufälligen Zahlen oder Bits.
2. Er darf wirklich nur einmal zur Verschlüsselung verwendet werden.
3. Der Schlüssel ist genau so lang wie die zu verschlüsselnden Daten Bislang scheiterte der Einsatz weitgehend daran, dass es keine preiswerten Zufallszahlengeneratoren mit überragenden Eigenschaften gab und weil die Benutzung eines Schlüssels, der die gleiche Länge hat wie die Daten als unpraktisch empfunden wurde.

Die Dokumente US 2007/177065 A1 und EP 2 175580 A1 zeigen bekannte Verfahren zum Ver- und Entschlüsseln von Daten.

Der Erfindung liegt die Aufgabe zu Grunde ein 100% sicheres Verschlüsselungsverfahren in der Praxis anwendbar und praktikabel zu machen. Diese Aufgabe wird entsprechend Anspruch 1 dadurch gelöst, dass ein Zufallszahlengenerator oder Zufallsbitgenerator höchster Qualität verwendet wird. Hierzu eignen sich insbesondere solche, die physikalische Zufallsphänomene wie Transistorrauschen, radioaktiver Zerfall oder Phasenrauschen einer Halbleiterschaltung benutzen. Dieser ideale Zufall wird nun zur späteren Verschlüsselung auf einem Speichermedium aufgezeichnet. Hierbei ist wichtig, dass dieses Speichermedium am sicheren Ort aufbewahrt werden muss oder im Fall von verschlüsselten Datenübertragungen dem Empfänger physisch und über einen vertrauenswürdigen Versandweg zugestellt wird. Das hier vorgestellte Vorrichtung zeichnet sich gegenüber dem Stand der Technik dadurch aus, dass der oder die Schlüssel vor der Benutzung mit der symmetrischen Verschlüsselung modifiziert wird/werden, und die Modifikation des Schlüssels durch ein bekanntes Verschlüsselungsverfahren mit Hilfe eines Passwortes durchgeführt wird. Diese Modifikation des Schlüssels oder der Schlüssel kann durch herkömmliche Verschlüsselung mit einem Passwort erfolgen.

Da die sichere Verschlüsselung nur dann gewährt ist, wenn der oder die Schlüssel nur ein einziges Mal verwendet werden, ist es entsprechend Anspruch 2 sinnvoll, Informationen über den Schlüsselverbrauch aufzuzeichnen.

Zur Erhöhung der Sicherheit können die Zufallsdaten vor der Speicherung entsprechend Anspruch 3 modifiziert werden (alternativ [1]).

Je nach Modifikation sind zusätzlich zu den dem oder den Schlüsseln ein oder zwei Passwörter erforderlich, ohne die auch eine Entschlüsselung nicht möglich ist.

Der oder die so u.U. modifizierte(n) Schlüssel werden dann mit Hilfe eines symmetrischen Verschlüsselungsverfahrens, am einfachsten unter Benutzung der XOR-Verknüpfung, mit den unverschlüsselten Daten [5] verknüpft und ergeben dann die verschlüsselten Daten [6]. Zusätzlich zu den verschlüsselten Daten müssen einige wenige Informationen gespeichert werden, die es ermöglichen, bei der Entschlüsselung den richtigen Schlüssel aufzufinden und zu benutzen. Hierbei muss eine Kennung zur Wiederauffindung des Schlüssels und auch zu den gewählten Modifikationsschritten des Schlüssels gesichert werden. Diese Information kann entsprechend Anspruch 4 alternativ oder kumulativ entweder auf dem Datenträger aufgezeichnet werden auf dem sich der oder die Schlüssel befinden, auf dem Datenträger auf dem sich die verschlüsselten Daten befinden oder auf einem dritten Datenträger.

Vorteil des Verfahrens ist es auch, dass entsprechend Anspruch 5 der Benutzer des Verfahrens selbst keinen Zufallszahlengenerator betreiben muss, sondern nur ein entsprechendes Speichermedium mit den Zufallsdaten benutzen kann. Heutzutage sind kleine transportable Festplatten bereits mit Speicherkapazitäten von 2 TByte zu geringen Preisen erhältlich (Anspruch 6). Allerdings ist hierbei eine Kopie der Schlüsseldaten auf dem Transportweg nicht völlig ausgeschlossen.

Zur Entschlüsselung werden der oder die Schlüssel, je nach Modifikationsgrad der Daten zusätzlich ein oder zwei Passwörter und natürlich die zu entschlüsselnden Daten benötigt.

Bei Vorhandensein dieser Daten und der Information welcher Schlüssel verwendet werden muss, kann die Entschlüsselung der Daten mit dem selben Verfahren wir die Verschlüsselung (z.B. durch XOR-Verknüpfung) erfolgen.

Eine Entschlüsselung der Daten ohne Schlüssel ist 100% unmöglich!

Bei nicht zu großen Datenmengen kann das Verfahren auch entsprechend Anspruch 8 unter Benutzung eines USB-Sticks oder einer transportablen Festplatte mit kleinem Formfaktor angewendet werden, was die Verwendung in Zusammenhang mit Mobilcomputern ermöglicht.

Für noch höhere Sicherheit kann der Zufallszahlengenerator direkt beim Anwender betrieben werden und der oder die Schlüssel können entsprechend Anspruch 7 direkt benutzt werden (alternativ [2]). In diesem Fall müssen die Schlüsseldaten allerdings für die späterer Entschlüsselung aufgezeichnet werden.

Die Ansprüche 8 und 9 zeigen die entsprechenden Schritte zur Nutzung des Verfahrens entsprechend der in den vorherigen Ansprüchen unter Schutz gestellten Vorrichtung.

In den Zeichnungen sind Ausführungsbeispiele für Ver- und Entschlüsselung gezeigt:

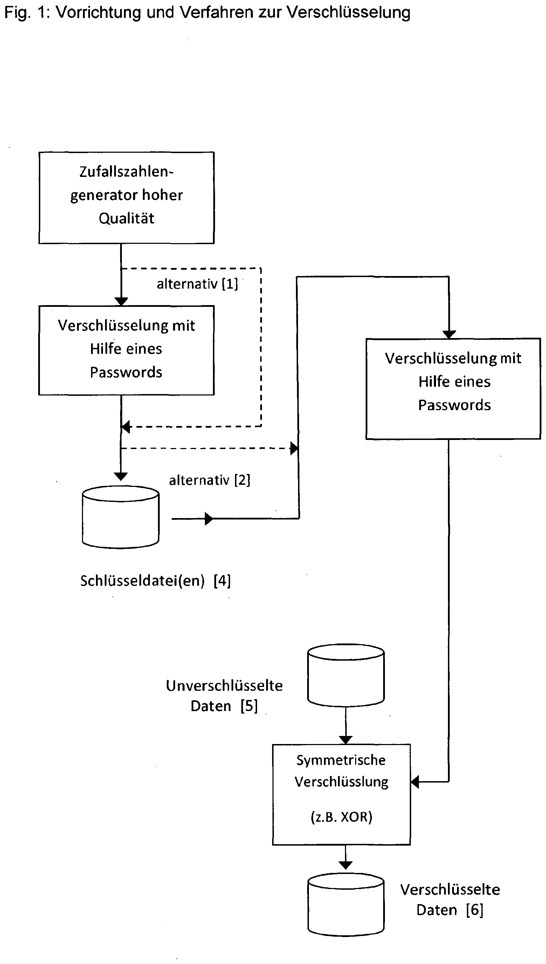

Fig. 1: Vorrichtung und Verfahren zur Verschlüsselung

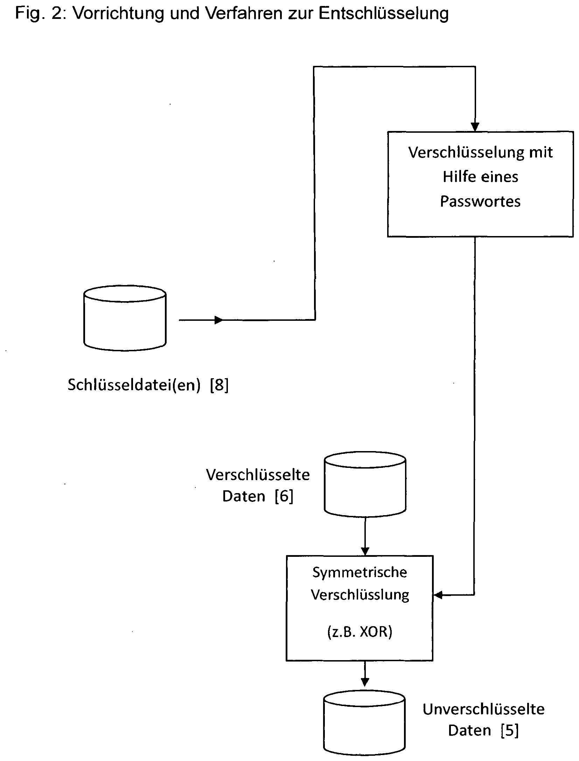

Fig. 2: Vorrichtung und Verfahren zur Entschlüsselung

## Patentansprüche

1. Vorrichtung zur Ver- und Entschlüsselung von Daten bestehend aus
- einem Zufallszahlengenerator, der physikalische Zufallsphänomene benutzt,
- mindestens einem Speichermedium für den Schlüssel oder modifizierten Schlüssel und
- einem symmetrischen Verschlüsselungsverfahren
wobei die Vorrichtung dazu angepasst ist,
- den oder die Schlüssel mit Hilfe des Zufallszahlengenerators zu erzeugen und auf dem Speichermedium aufzuzeichnen und
- Informationen über den für die unverschlüsselten Daten benutzten Schlüssel aufzuzeichnen, damit bei der Entschlüsselung der entsprechende Schlüssel wiedergefunden werden kann,
- den oder die Schlüssel vor der Benutzung mit der symmetrischen Verschlüsselung zu modifizieren, und die Modifikation des Schlüssels durch ein bekanntes Verschlüsselungsverfahren mit Hilfe eines Passwortes durchzuführen,
- dass der zur Verschlüsselung der Daten verwendete Schlüssel genau so lang wie die zu verschlüsselnden Daten ist,
**dadurch gekennzeichnet, dass** die Vorrichtung ferner dazu angepasst ist,
- dass der modifizierte Schlüssel unter Benutzung des symmetrischen Verschlüsselungsverfahren die verschlüsselten Daten erzeugt.

2. Vorrichtung nach Anspruch 1 **dadurch gekennzeichnet,**
**dass** Informationen über schon verbrauchte Zufallszahlen aufgezeichnet werden, damit verhindert wird, dass ein Schlüssel mehrfach verwendet wird.

3. Vorrichtung nach einem oder mehreren der vorausgehenden Ansprüche **dadurch gekennzeichnet,**
**dass** der aufgezeichnete Schlüssel modifiziert wird bevor er auf das Speichermedium geschrieben wird.

4. Vorrichtung nach einem oder mehreren der vorausgehenden Ansprüche 1 bis 3 **dadurch gekennzeichnet,**
**dass** die Informationen über den für eine unverschlüsselte Datei benutzten Schlüssel und /oder den Schlüsselverbrauch
- auf dem Datenträger aufgezeichnet werden, auf dem sich auch der Schlüssel oder modifizierte Schlüssel befindet und/oder
- auf dem Datenträger aufgezeichnet werden, auf dem sich die verschlüsselten Daten befinden und/oder
- sich auf einem weiteren Datenträger befinden.

5. Vorrichtung nach einem oder mehreren der vorausgehenden Ansprüche **dadurch gekennzeichnet,**
**dass** der Schlüssel oder modifizierte Schlüssel auf einem transportablen Datenträger aufgezeichnet wird, z.B. so, dass diese Aufzeichnung an einem völlig getrennten Ort und/oder zu einer völlig anderen Zeit verglichen mit der eigentlichen Ver- oder Entschlüsselung durchgeführt werden kann.

6. Vorrichtung nach einem oder mehreren der vorausgehenden Ansprüche **dadurch gekennzeichnet,**
**dass** als Speichermedium ein USB-Stick oder eine transportable Festplatte mit kleinem Formfaktor verwendet wird.

7. Vorrichtung nach einem oder mehreren der vorausgehenden Ansprüche **dadurch gekennzeichnet,**
**dass** die zur Verschlüsselung benutzten Schlüssel direkt einem Zufallszahlengenerator entstammen und diese lediglich für die spätere Entschlüsselung modifiziert oder nicht modifiziert aufgezeichnet werden.

8. Verfahren zur Verschlüsselung von Daten durch die folgenden Schritte gekennzeichnet:
a) Zufallszahlen mit Hilfe eines Zufallszahlengenerators, basierend auf physikalische Zufallsphänomenen, erzeugen.
b) Die Zufallszahlen mit Hilfe eines Passwortes und eines bekannten Verschlüsselungsverfahrens modifizieren. Dieser Verfahrensschritt ist optional.
c) Den so erzeugten Schlüssel auf einem Datenträger speichern.
d) Den Schlüssel mit Hilfe eines Passwortes und eines bekannten Verschlüsselungsverfahrens modifizieren.
e) Mit dem so erzeugten modifizierten Schlüssel die zu verschlüsselnden Daten mit einem symmetrischen Verschlüsselungsverfahren verschlüsseln,
wobei ein Schlüssel nur einmal verwendet wird und genau so lang ist wie die zu verschlüsselnden Daten.

9. Verfahren zur Entschlüsselung von verschlüsselten Daten, die durch das Verfahren nach Anspruch 8 erzeugt wurden, durch die folgenden Schritte gekennzeichnet:
a) Den/die verwendeten Schlüssel von einem Datenträger lesen.
b) Den Schlüssel mit Hilfe eines Passwortes und eines bekannten Verschlüsselungsverfahrens modifizieren.
c) Mit dem so erzeugten modifizierten Schlüssel die verschlüsselten Daten mit einem symmetrischen Verschlüsselungsverfahren entschlüsseln.

## Claims

1. device for the encryption and decryption of data consisting of
- a random number generator using physical random phenomena
- at least one storage medium for the key or modified key, and
- a symmetric encryption method
the device being adapted to
- generating the key or keys by means of the random number generator and recording them on the storage medium, and
- record information about the key used for the unencrypted data, so that the corresponding key can be retrieved during decryption
- to modify the key or keys before using them with the symmetric encryption, and to carry out the modification of the key by a known encryption method with the help of a password,
- in that the key used for encrypting the data is exactly as long as the data to be encrypted,
**characterized in that** the apparatus is further adapted
- that the modified key generates the encrypted data using the symmetric encryption method.

2. device according to claim 1 **characterized in**
**that** information about already used random numbers is recorded to prevent a key from being used more than once.

3. device according to one or more of the preceding claims **characterized in,**
**that** the recorded key is modified before it is written to the storage medium.

4. device according to one or more of the preceding claims 1 to 3 **characterized in,**
- **that** the information about the key used for an unencrypted file and/or the key usage
- is recorded on the data carrier on which the key or modified key is also located and/or
- is recorded on the data carrier on which the encrypted data is located and/or
- are located on a further data carrier.

5. device according to one or more of the preceding claims **characterized in,**
**that** the key or modified key is recorded on a transportable data carrier, e.g. in such a way that this recording can be carried out at a completely separate location and/or at a completely different time compared to the actual encryption or decryption.

6. device according to one or more of the preceding claims **characterized in,**
**that** a USB stick or a transportable hard disk with small form factor is used as storage medium.

7. device according to one or more of the preceding claims **characterized in**,
**in that** the keys used for encryption originate directly from a random number generator and these are recorded only modified or unmodified for subsequent decryption.

8. method for encrypting data **characterized by** the following steps:
a) generating random numbers using a random number generator based on physical random phenomena.
b) Modify the random numbers using a password and a known encryption method. This step of the procedure is optional.
c) Store the generated key on a data carrier.
d) Modify the key using a password and a known encryption method.
e) Using the modified key thus generated, encrypt the data to be encrypted using a symmetric encryption method, where a key is used only once and is exactly as long as the data to be encrypted.

9. a method for decrypting encrypted data generated by the method according to claim 8, **characterized by** the following steps:
a) Reading the key(s) used from a data carrier.
b) Modify the key using a password and a known encryption method.
c) Using the modified key thus generated, decrypt the encrypted data using a symmetric encryption method.

## Revendications

1. dispositif de chiffrement et de déchiffrement de données comprenant
- un générateur de nombres aléatoires utilisant des phénomènes physiques aléatoires
- au moins un support de stockage de la clé ou de la clé modifiée, et
- un procédé de chiffrement symétrique
le dispositif étant adapté pour
- générer la ou les clés au moyen du générateur de nombres aléatoires et les enregistrer sur le support de stockage, et
- enregistrer des informations sur la clé utilisée pour les données non cryptées, de sorte que la clé correspondante puisse être récupérée pendant le décryptage
- de modifier la ou les clés avant de les utiliser avec le chiffrement symétrique, et d'effectuer la modification de la clé par un procédé de chiffrement connu à l'aide d'un mot de passe,
- en ce que la clé utilisée pour le cryptage des données est exactement aussi longue que les données à crypter,
**caractérisé en ce que** le dispositif est en outre adapté
- que la clé modifiée génère les données cryptées en utilisant le procédé de cryptage symétrique.

2. Dispositif selon la revendication 1, **caractérisé en ce que**
que des informations sur les nombres aléatoires déjà utilisés sont enregistrées pour empêcher qu'une clé soit utilisée plus d'une fois.

3. Dispositif selon l'une ou plusieurs des revendications précédentes **caractérisé en ce que**,
que la clé enregistrée est modifiée avant d'être écrite sur le support de stockage.

4. dispositif selon une ou plusieurs des revendications précédentes 1 à 3 **caractérisé en ce que**,
- que les informations relatives à la clé utilisée pour un fichier non crypté et/ou l'utilisation de la clé
- est enregistrée sur le support de données sur lequel se trouve également la clé ou la clé modifiée et/ou
- est enregistrée sur le support de données sur lequel se trouvent les données cryptées et/ou
- sont situées sur un autre support de données.

5. dispositif selon une ou plusieurs des revendications précédentes, **caractérisé en ce que**
que la clé ou la clé modifiée est enregistrée sur un support de données transportable, par exemple de telle manière que cet enregistrement peut être effectué à un endroit complètement séparé et/ou à un moment complètement différent par rapport au cryptage ou au décryptage réel.

6. Dispositif selon l'une ou plusieurs des revendications précédentes **caractérisé en ce que**,
qu'une clé USB ou un disque dur transportable de faible encombrement est utilisé comme support de stockage.

7. dispositif selon une ou plusieurs des revendications précédentes **caractérisé en ce que**,
**en ce que** les clés utilisées pour le cryptage proviennent directement d'un générateur de nombres aléatoires et celles-ci ne sont enregistrées que modifiées ou non pour un décryptage ultérieur.

8. procédé de cryptage de données **caractérisé par** les étapes suivantes :
a) générer des nombres aléatoires en utilisant un générateur de nombres aléatoires basé sur des phénomènes physiques aléatoires.
b) Modifier les nombres aléatoires en utilisant un mot de passe et une méthode de cryptage connue.
Cette étape de la procédure est facultative.
c) Stocker la clé générée sur un support de données.
d) Modifier la clé à l'aide d'un mot de passe et d'une méthode de cryptage connue.
e) En utilisant la clé modifiée ainsi générée, crypter les données à crypter en utilisant une méthode de cryptage symétrique, où une clé n'est utilisée qu'une seule fois et est exactement aussi longue que les données à crypter.

9. Procédé de décryptage de données cryptées générées par le procédé selon la revendication 8, **caractérisé par** les étapes suivantes :
a) Lire la ou les clés utilisées sur un support de données.
b) Modifier la clé en utilisant un mot de passe et un procédé de cryptage connu.
c) En utilisant la clé modifiée ainsi générée, décrypter les données cryptées en utilisant un procédé de cryptage symétrique.
